# EUROPÄISCHE PATENTSCHRIFT

(11) **EP 2 250 868 B1**
(45) Veröffentlichungstag und Bekanntmachung des Hinweises auf die Patenterteilung: **13.03.2013**
(21) Anmeldenummer: 10159628.6
(22) Anmeldetag: 12.04.2010
(51) Int. Cl.: A01D 41/12

(54) **Erntegutrestehäcksel und -verteilanordnung für einen Mähdrescher**
Harvested goods residue shredder and distribution assembly for a combine harvester
Agencement de hachage et de distribution de résidus de produits de récolte pour une moissonneuse-batteuse

(30) Priorität: 14.05.2009 DE 102009003123
(43) Veröffentlichungstag der Anmeldung: 17.11.2010
(73) Patentinhaber: DEERE & COMPANY, Moline, Illinois 61265-8098 (US)
(72) Erfinder: Priesnitz, Rico, 66822, Lebach (DE); Weichholdt, Dirk, 57200, Woelfing Les Sarreguemines (DE); Klein, Oliver, 66822, Lebach (DE); Lauer, Fritz, 66894, Krähenberg (DE); Pohlmann, Norbert, 66482, Zweibrücken (DE)
(74) Vertreter: Holst, Sönke

(56) Entgegenhaltungen:
- EP-A1- 0 631 717
- EP-A2- 1 514 466
- WO-A1-02/34029
- DE-A1-102006 017 404
- DE-C1- 19 908 111

## Beschreibung

Die Erfindung betrifft eine Erntegutrestehäcksel- und -verteilanordnung für einen Mähdrescher.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Das ausgedroschene Stroh wird in der Regel entweder gehäckselt und über die Schneidwerksbreite auf dem Feld verteilt oder um den Strohhäcksler herum geleitet und in nicht gehäckselter Form in einem Schwad auf dem Feld abgelegt, um es später mit eine Ballenpresse aufnehmen zu können. Die am rückwärtigen Auslass der Reinigungseinrichtung verbleibenden Erntegutreste, wie Kaff und kleine Strohteile, werden durch einen Kaffstreuer auf dem Feld verteilt oder durch den Strohhäcksler geleitet und auf dem Feld verteilt.

Die DE 199 08 111 C1 beschreibt einen Mähdrescher mit einem Strohhäcksler und zwei seitlich nebeneinander angeordneten, dem Strohhäcksler folgenden Wurfgebläsen zum breit verteilten Austragen des Strohs über das Feld. Der Auslass des Strohhäckslers und der Einlass der in einem Gehäuse angeordneten Wurfgebläse, die um eine etwa senkrechte Achse rotierende Wurfpaddel umfassen, sind zu Zwecken einer richtungsänderungslosen Gutübergabe in einer Ebene angeordnet. Um die Wurfgebläse herum sind Teilummantelungen angebracht, die sich zwischen den Wurfgebläsen in einer vorderen, dem Strohhäcksler zugewandten Spitze vereinigen. Im rückwärtigen Bereich schließen sich an die Teilummantelungen mit Ausbrechungen ausgestattete Abschirmungen an, um das Stroh durch die Ausbrechungen hindurch auf das Feld abzugeben. Die Abschirmungen sind zur Verstellung der Verteilbreite verdrehbar oder höhenverstellbar.

In der DE 199 08 111 C1 ist keine Betriebsart vorgesehen, in der nur das Kaff durch den Strohhäcksler geleitet wird, während das Stroh in einem Schwad auf dem Boden abgelegt wird, wie sie beispielsweise in der DE 10 2008 001 460 A1 beschrieben wird. Der Verstellbereich der Abschirmungen der DE 199 08 111 C1 umfasst demnach keine Stellung, in der die Erntegutreste ausschließlich zur Seite, aber nicht genau nach hinten abgegeben werden. Bei der Schwadablagebetriebsart ist es aber in vielen Fällen wünschenswert, das Kaff seitlich beabstandet vom Stroh abzulegen, um letzteres ohne Kaffanteile aufnehmen und weiterverwenden zu können.

Die EP 1 514 466 A2 beschreibt einen Mähdrescher mit einem Strohhäcksler und zwei seitlich nebeneinander angeordneten, dem Strohhäcksler folgenden Wurfgebläsen zum breit verteilten Austragen des Strohs über das Feld. Am Umfang der Wurfgebläse sind um die Achse der Wurfgebläse drehbare Teilummantelungen angeordnet, die eine Abrisskante bilden, deren Position abhängig von der Arbeitsbreite des Schneidwerks eingestellt wird.

### Aufgabe der Erfindung

Die der Erfindung zu Grunde liegende Aufgabe wird darin gesehen, eine Wurfgebläseanordnung für einen Mähdrescher bereitzustellen, die eine unproblematische Anpassung der seitlichen Verteilung der Erntegutreste an eine Schwadablage- und eine Häckselbetriebsart ermöglicht.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Erntegutrestehäcksel- und -verteilanordnung für einen Mähdrescher umfasst einen Strohhäcksler und zwei bezüglich der Gutflussrichtung stromab des Strohhäckslers angeordnete Wurfgebläse. Im Erntebetrieb zerkleinert der Strohhäcksler ihm zugeführte Erntegutreste, insbesondere Stroh. Er kann mit seinen Messern und ggf. zusätzlichen Förderpaddeln auch andere Erntegutreste fördern, beispielsweise Kaff, sei es gemeinsam mit dem Stroh im Häckselbetrieb oder wahlweise in einer Strohschwadablagebetriebsart, in dem das Stroh am Strohhäcksler vorbeigeführt wird, nur diese Erntegutreste. Die vom Strohhäcksler heran geförderten Erntegutreste werden durch die zwei Wurfgebläse angenommen und über das Feld verteilt. Dazu rotieren die Wurfgebläse gegensinnig, wobei die dem Strohhäcksler zugewandten Bereiche der Wurfgebläse aufeinander zu drehen. Das in Vorwärtsrichtung linke Wurfgebläse rotiert, wenn man es von oben betrachtet, demnach im Uhrzeigersinn, während das in Vorwärtsrichtung rechte Wurfgebläse, von oben her betrachtet, im Gegenuhrzeigersinn rotiert. Weiterhin sind an einem um die Drehachse der Wurfgebläse drehbar abgestützten Drehteller eine erste, längere Abschirmung und eine zweite, kürzere Abschirmung angebracht. Durch Drehen des Drehtellers um die Drehachse kann wahlweise die erste Abschirmung in eine aktive Position verbracht werden, in der sie bewirkt, dass die vom Wurfgebläse geförderten Erntegutreste weiter seitlich nach außen abgegeben werden, indem sie ihre freie Abgabe radial nach außen zunächst verhindert und die Abgabe erst stromab der ersten Abschirmung erfolgt. Diese erste Abschirmung dient insbesondere dazu, im Schwadablagebetrieb die von Stroh verschiedenen Erntegutreste (wie Kaff) relativ weit nach außen abzuwerden und somit getrennt vom Schwad abzulegen. Außerdem kann anstelle der ersten Abschirmung die zweite, kürzere Abschirmung in eine aktive Position verbracht werden, in der sie bewirkt, dass die vom Wurfgebläse geförderten Erntegutreste eher und somit weiter nach innen als bei einer aktiven ersten Abschirmung abgegeben werden, indem sie ihre freie Abgabe radial nach außen nur über einen kleineren Winkel verhindert als die erste Abschirmung. Die zweite Abschirmung dient insbesondere dazu, im Häckselbetrieb die Erntegutreste möglichst gleichmäßig über das Feld zu verteilen.

Auf diese Weise wird ein unproblematisches Ändern der Verteilcharakteristik der Wurfgebläse ermöglicht.

In der aktiven Position befinden sich die Abschirmungen vorzugsweise im Zwickelbereich zwischen den Wurfgebläsen und rückwärtig von deren Drehachsen. Sie verhindern demnach, dass die sich dort nach hinten und außen drehenden Wurfgebläse die Erntegutreste in Richtung auf die Längsmittelebene des Mähdreschers und deren Nachbarschaft abgeben.

Um einen Teil des Umfangs des Wurfgebläses erstreckt sich bei einer bevorzugten Ausführungsform der Erfindung eine starr angebrachte Teilummantelung, die das Wurfgebläse nach außen hin in axialer und Umfangsrichtung abdeckt. Diese Teilummantelungen können insbesondere die vordere Hälfte der Wurfgebläse abdecken, wenn den Wurfgebläsen die Erntegutreste in axialer Richtung zugeführt werden, sei es genau axial oder unter einem spitzen oder stumpfen Winkel. Falls die Erntegutreste den Wurfgebläsen hingegen in radialer Richtung zugeführt werden, können die Teilummantelungen die Wurfgebläse zur Seite nach außen und/oder zur Mitte hin abdecken.

Den Drehtellern kann jeweils ein fremdkraftbetätigter Antrieb zugeordnet werden, der durch einen Bediener des Mähdreschers von seinem Arbeitsplatz aus oder selbsttätig gesteuert werden kann. Es bietet sich insbesondere an, den Antrieb mit einer Klappe zu koppeln, die das Stroh wahlweise in den Strohhäcksler oder daran vorbei leiten kann, damit der Antrieb die erste Abschirmung im Schwadablagebetrieb in die aktive Position und die zweite Abschirmung im Häckselbetrieb in die aktive Position verbringt. Im Häckselbetrieb können die zweiten Abschirmungen beider Wurfgebläse durch den Bediener oder eine geeignete Automatik unabhängig voneinander verstellt werden, um beispielsweise Seitenwind- oder Hangeinflüsse auszugleichen.

Die Abschirmungen können auf dem Drehhalter insbesondere sich diametral gegenüberliegend angebracht werden, so dass die jeweils inaktive Abschirmung den Betrieb möglichst wenig beeinträchtigt.

Hinsichtlich der Anbringung der Abschirmungen an den Wurfgebläsen bestehen im Rahmen des erfindungsgemäßen Gedankens unterschiedliche Möglichkeiten. Es wäre beispielsweise denkbar, den Drehhalter oberhalb oder unterhalb eines Gehäuses der Wurfgebläse anzubringen, was aber in vielen Fällen zu Platzproblemen führt. Bei einer vorteilhaften Ausführungsform der Erfindung wird vorgeschlagen, den Drehhalter mit einem mittleren Bereich mit einer mittigen Öffnung zu versehen, die zur Drehachse des Wurfgebläses koaxial ist. Durch diese Öffnung kann sich eine Welle zum Antrieb des Wurfgebläses erstrecken, oder ein in der Mitte der Wurfpaddel des Wurfgebläses angeordneter Hydromotor zum Antrieb des Wurfgebläses bzw. dessen Zuleitung. Der mittlere Bereich kann in axialer Richtung zwischen einem Deckel (oder Boden) des Wurfgebläsegehäuses und einer mit dem Deckel (oder Boden) verbundenen Halterungsscheibe angeordnet und somit in axialer Richtung fixiert sein. Die Fixierung in radialer erfolgt beispielsweise in der Weise, dass die zentrische Öffnung an mit dem Deckel (oder dem Boden) und/oder der Halterungsscheibe verbundenen Halterungselementen (z. B. Schrauben) anliegt und somit in radialer Richtung fixiert ist. Die beschriebene Gleitlagerung, die auch durch Wälzlager verfeinert werden könnte, zeichnet sich durch einen einfachen Aufbau aus.

Der Antrieb zum Drehen des Drehtellers um die Achse kann ein Zahnrad umfassen, das mit einer radial äußeren Verzahnung des mittleren Bereichs des Drehtellers kämmt.

Die Wurfgebläse können durch in ihrem Zwickelbereich rückwärtig ihrer Drehachsen angeordnete Teilummantelungen teilweise umschlossen werden, die im Zusammenwirken mit den zweiten Abschirmungen (und ggf. einem in der Mitte zwischen den Wurfgebläsen freibleibenden Durchlass, durch den ein mittlerer Teil des Erntegutrestestroms frei vom Strohhäcksler nach hinten auf das Feld gelangen kann) eine gewünschte, möglichst gleichmäßige Verteilung der Erntegutreste auf dem Feld bewirken. Diese Verteilung lässt sich insbesondere dadurch erzielen, dass die zweiten Abschirmungen niedriger als die ersten Abschirmungen sind.

Die zweiten Abschirmungen sind vorzugsweise in ihrer aktiven Position an den Außenseiten der hier beschriebenen Teilummantelungen angeordnet. Die ersten Abschirmungen sind hingegen in ihrer aktiven Position vorzugsweise an den Innenseiten der Teilummantelungen angeordnet, um zu verhindern, dass sich das besonders feinteilige und somit kritische Kaff zwischen der Teilummantelung und der Abschirmung verklemmt.

### Ausführungsbeispiel

Anhand der Abbildungen wird ein Ausführungsbeispiel der Erfindung erläutert. Es zeigt:
- Fig. 1: eine teilgeschnittene seitliche Ansicht eines Mähdreschers mit einem Strohhäcksler und Wurfgebläsen,
- Fig. 2: eine vergrößerte seitliche Ansicht des Strohhäckslers und eines Wurfgebläses,
- Fig. 3: eine Draufsicht auf den Strohhäcksler und die Wurfgebläse,
- Fig. 4: eine perspektivische Ansicht eines Erntegutresteführungselements,
- Fig. 5: eine perspektivische Ansicht der Wurfgebläse von hinten und unten mit abgenommenen Drehtellern und Wurfpaddeln, wobei beim rechten Wurfgebläse eine längere Abschirmung und bei linken Wurfgebläse eine kürzere Abschirmung in einer aktiven Stellung ist,
- Fig. 6: die Ansicht aus Fig. 5, wobei beim linken Wurfgebläse die kürzere Abschirmung in eine weiter zurückgezogene Stellung verbracht ist, und
- Fig. 7: die Ansicht aus Figur 6 mit montierten Drehtellern und Wurfpaddeln.

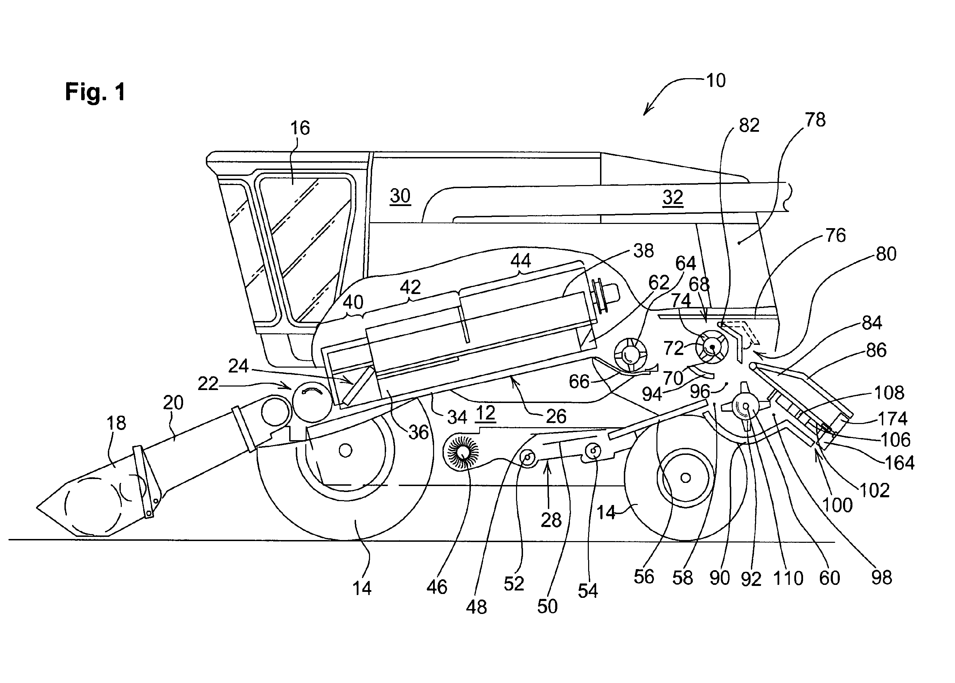

Die Figur 1 zeigt einen landwirtschaftlichen Mähdrescher 10 mit einem Fahrgestell 12 mit im Eingriff mit dem Boden befindlichen Rädern 14, die am Fahrgestell 12 befestigt sind und zum Vortrieb des Mähdreschers 10 in einer Vorwärtsrichtung dienen, die in der Figur 1 nach links verläuft. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Erntegutbearbeitungseinrichtung 26. Im Folgenden beziehen sich Richtungsangaben, wie vorn und hinten, auf die Vorwärtsrichtung des Mähdreschers 10, die in der Figur 1 nach links verläuft.

Die Erntegutbearbeitungseinrichtung 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Der Beschickungsabschnitt 40 ist an der Vorderseite der axialen Erntegutbearbeitungseinrichtung 26 angeordnet. In Längsrichtung stromab und rückwärtig des Beschickungsabschnitts 40 liegen der Dreschabschnitt 42 und der Trennabschnitt 44. Die Trommel 38 ist im Beschickungsabschnitt 40 kegelstumpfförmig. Der Dreschabschnitt 42 umfasst einen kegelstumpfförmigen vorderen Abschnitt und einen zylindrischen rückwärtigen Abschnitt. Am Ende der axialen Erntegutbearbeitungseinheit 26 befindet sich der zylindrische Trennabschnitt 44 der Trommel 38. Anstelle einer axialen Erntegutbearbeitungseinheit 26 können auch eine tangentiale Dreschtrommel und eine ihr folgende axiale Trenneinrichtung oder ihr folgende Strohschüttler verwendet werden.

Korn und Spreu, die durch einen dem Dreschabschnitt 42 zugeordneten Dreschkorb und ein dem Trennabschnitt 44 zugeordneten Trennrost fallen, werden einem Reinigungssystem 28 mit einem Gebläse 46 und in eine Schwingbewegung versetzbaren Lamellensieben 48, 50 zugeführt. Das Reinigungssystem 28 entfernt die Spreu und führt das saubere Korn über einen Schneckenförderer 52 einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Kornwagen, Anhänger oder Lastwagen entladen werden. Am rückwärtigen Ende des unteren Lamellensiebs 50 verbleibendes Erntegut wird mittels eines Schneckenförderers 54 und eines Überkehrförderers (nicht gezeigt) wieder der Erntegutbearbeitungseinrichtung 26 zugeführt. Die am rückwärtigen Ende des oberen Lamellensiebs 48 abgegebenen Erntegutreste, die im Wesentlichen aus Kaff (Spreu) und kleinen Strohteilchen bestehen, werden durch einen Schwingbodenförderer 56 nach hinten in einen Einlass 58 eines Strohhäckslers 60 gefördert.

Gedroschenes, den Trennabschnitt 44 verlassendes Stroh wird durch einen Auslass 62 aus der Erntegutbearbeitungseinrichtung 26 ausgestoßen und einer Auswurftrommel 64 zugeführt. Die mit einem darunter angeordneten Boden 66 zusammenwirkende Auswurftrommel 64 wirft das Stroh nach hinten aus. Rückwärtig der Auswurftrommel 64 und etwa in vertikaler Höhe ihrer Drehachse befindet sich ein weiterer Förderer in Form eines oberschlächtig arbeitenden Trommelförderers 68. Der Trommelförderer 68 erstreckt sich horizontal und quer zur Vorwärtsrichtung und ist durch einen geeigneten Antrieb um seine Achse 70, an der er drehbar am Fahrgestell 12 befestigt ist, in eine Drehrichtung in Drehung versetzbar, in der er oberschlächtig arbeitet und in der Figur 1 im Uhrzeigersinn dreht, wie durch den Pfeil angedeutet. Zum Antrieb des Trommelförderers 68 wird in der Regel ein Hydraulikmotor verwendet. Der Trommelförderer 68 entspricht in seinem Aufbau der Auswurftrommel 64 und umfasst einen rotationssymmetrischen Mantel 72 mit um seinen Umfang verteilten, starr daran angebrachten Mitnehmern 74. Unterhalb des Trommelförderers 68 ist eine Wanne 94 angeordnet.

Oberhalb der Auswurftrommel 64 und des Trommelförderers 68 ist eine sich horizontal und in Vorwärtsrichtung erstreckende obere Wand 76 angebracht, die einen darüber befindlichen Motorraum 78 nach unten abschließt. An der Wand 76 ist eine Klappe 80 an ihrem vorderen, dem Trommelförderer 68 benachbarten Ende um eine sich horizontal und quer zur Vorwärtsrichtung erstreckende Achse 82 zwischen einer Schwadablageposition und einer Häckselposition verschwenkbar angelenkt. Die Klappe 80 ist in sich konkav gekrümmt, wobei der Radius an den Trommelförderer 68 angepasst ist.

Unterhalb des unteren und rückwärtigen Endes der Klappe 80 schließt sich (bei in der Häckselstellung befindlicher Klappe 80) lückenlos ein mit dem Fahrgestell 12 fest verbundenes Blech 84 an, das sich schräg nach hinten und unten erstreckt und mit einer sich daran anschließenden Rutsche 86 verbunden ist, auf der das Stroh im Schwadablagebetrieb nach unten auf den Feldboden gleiten kann. Das Strohschwad kann noch durch an der Oberseite der Rutsche 86 angebrachte Leitkufen oder Strohleitrechen (nicht gezeigt) in eine gewünschte Form gebracht werden.

Die Klappe 80 ist um die Achse 82 zwischen der Häckselposition, in der sie in der Figur 1 mit durchgezogenen Linien dargestellt ist, und einer Schwadablageposition verschwenkbar, in der die Klappe 80 in der Figur mit gestrichelten Linien dargestellt ist und sie sich oberhalb des Strohflusses nach hinten erstreckt.

Unterhalb des Blechs 84 befindet sich der Strohhäcksler 60, der sich aus einem Strohhäckslergehäuse 90 und einem darin angeordneten, um eine quer zur Vorwärtsrichtung und horizontal verlaufende Achse drehbaren Rotor 92 mit um den Umfang des Rotors 92 verteilten, pendelnd aufgehängten Häckselmessern 96 zusammensetzt. Am Rotor 92 können auch zusätzliche Wurfpaddelpaddel (nicht gezeigt) befestigt werden, oder einige oder alle Häckselmesser 96 umfassen Paddel zur Luftförderung. Stromab eines Auslasses 98 des Strohhäckslers 60 ist sind zwei seitlich nebeneinander unterhalb der Rutsche 86 angeordnete Wurfgebläse 100 vorgesehen, von denen in der Figur 1 nur ein einziges erkennbar ist. Die Wurfgebläse 100 umfassen eine Anzahl an Wurfpaddeln 102, die jeweils durch jeweils einen Hydraulikmotor 106 um ihre (sich etwa vertikal erstreckenden, jedoch leicht nach hinten und oben geneigten) Drehachsen 108 in Drehung versetzbar sind, und denen der Strohhäcksler 60 die Erntegutreste in axialer Richtung unter einem stumpfen Winkel gegenüber den Drehachsen der Wurfgebläse 100 von unten her zuführt.

Die Drehachse 110 des Rotors 92 des Strohhäckslers 60 erstreckt sich horizontal und quer zur Vorwärtsrichtung. Die Wurfgebläse 100 sind seitlich nebeneinander rückwärtig des Strohhäckslers 60 angeordnet. Die Wurfgebläse 100 befinden sich innerhalb der Breite des Strohhäckslers 60. Die Wurfgebläse 100 sind durch Halterungen (nicht gezeigt) am dem Rahmen 12 des Mähdreschers 10 und/oder an der Rutsche 86 befestigt. Es wäre auch möglich, den Strohhäcksler 60 und die Wurfgebläse 100 derart anzuordnen, dass der Strohhäcksler 60 die Wurfgebläse 100 von oben her beaufschlagt. Bei einer anderen Ausführungsform sind die Drehachsen 108 der Wurfgebläse 100 horizontal oder genau vertikal.

In der Schwadablageposition der Klappe 80 fördert der Strohhäcksler 60 nur die Erntegutreste aus dem Reinigungssystem 28 zu den Wurfgebläsen 100, welche sie etwa über die Breite des Schneidwerks 18 auf dem Feldboden verteilen. Im Häckselbetrieb zerkleinert der Strohhäcksler 60 auch das Stroh auf dem Auslass 62 der Erntegutbearbeitungseinrichtung 26, das durch die Auswurftrommel 64 und den Trommelförderer 68 gegen die Klappe 80 geworfen wird und dann nach unten in den Einlass 58 des Strohhäckslers 60 fällt.

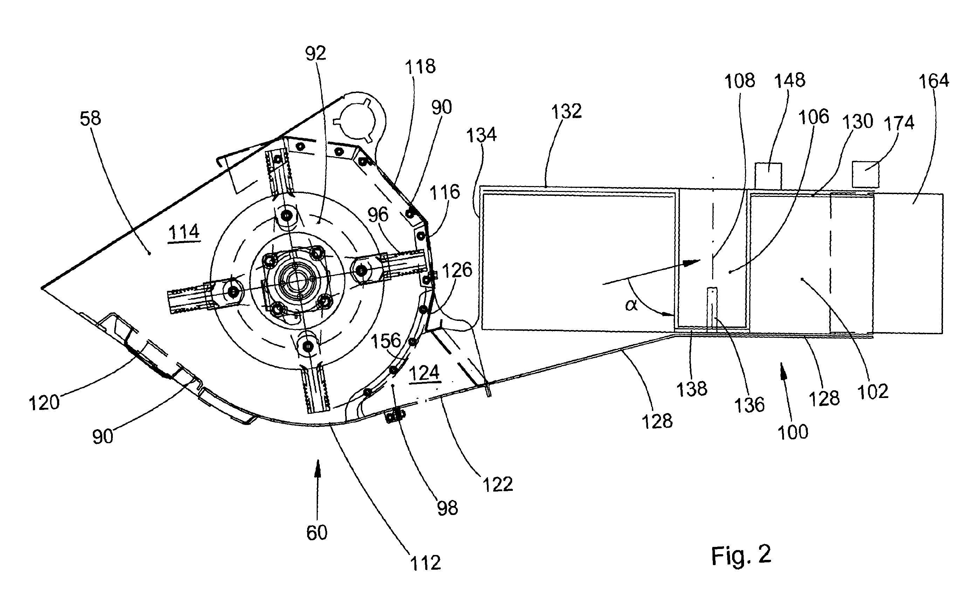

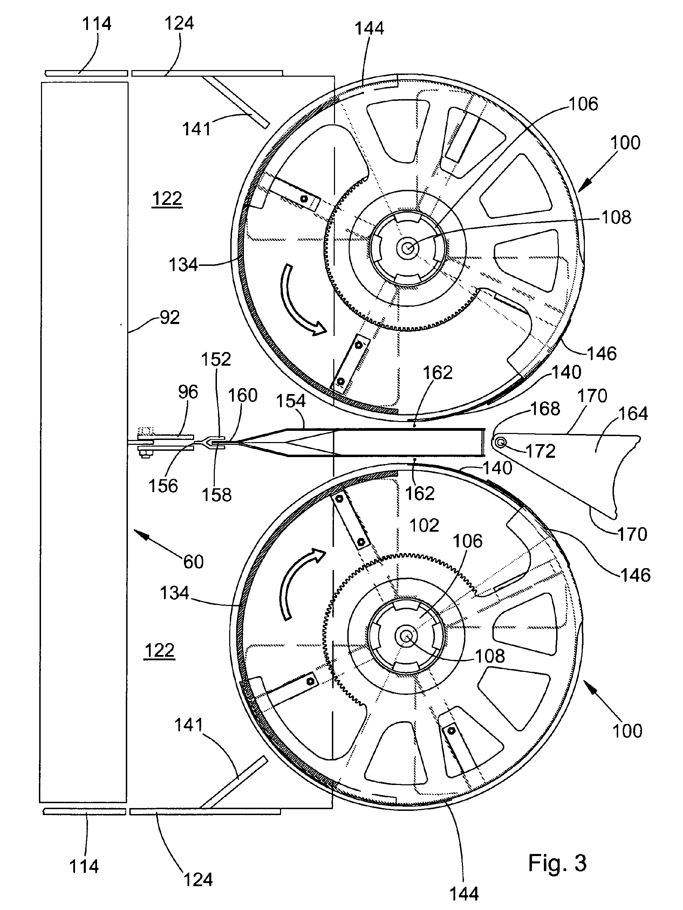

Es wird nun auf die Figuren 2 und 3 verwiesen, in welcher die Erntegutrestehäcksel- und -verteilanordnung des Mähdreschers 10 in einer Seitenansicht (Figur 2) und einer Draufsicht (Figur 3) dargestellt ist. Die Erntegutrestehäcksel- und -verteilanordnung umfasst den Strohhäcksler 60 und die Wurfgebläse 100. Das Strohhäckslergehäuse 90 umfasst einen Boden 112, zwei Seitenwände 114 und weitere Querbleche 116, 118, 120, die wie der Boden 112 die Seitenwände 114 untereinander verbinden und den Rotor 74 umschließen. Der Boden 112 ist an der Unterseite des Strohhäckslergehäuses 90 angeordnet und umschließt den von den Häckselmessern 96 definierten Hüllkreis kreisbogenförmig in einem relativ geringen Abstand mit einem Radius. Es können auch Gegenmesser (nicht dargestellt) vorgesehen sein, die am Strohhäckslergehäuse 90 befestigt werden und in den Hüllkreis der Häckselmesser 96 eindringen, um die Erntegutreste effektiv zu zerkleinern.

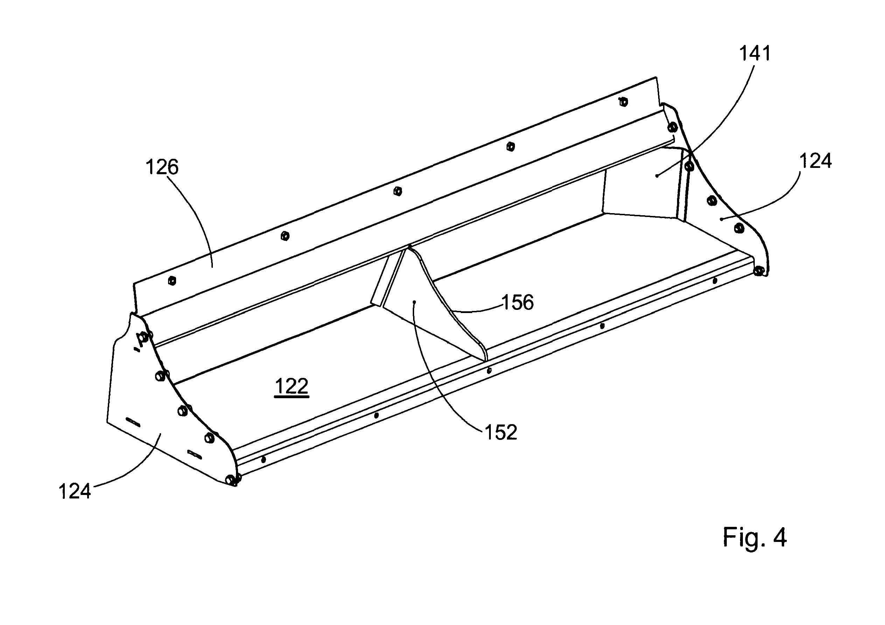

An den Boden 112 schließt sich in der Flussrichtung der Erntegutreste ein Erntegutresteführungselement 122 an, das in der Figur 4 in einer perspektivischen Ansicht dargestellt ist. Das Erntegutresteführungselement 122 ist zwischen Seitenwandverlängerungen 124 angeordnet, die mit je einer Seitenwand 114 des Strohhäckslergehäuses 90 durch Schraubverbindungen verbunden sind und sich dazu parallel erstrecken. Das Erntegutresteführungselement 122 ist in sich eben (hat demnach einen Radius von ∞). Das Erntegutresteführungselement 122 ist an seinem vorderen Ende nach unten abgewinkelt, um einen Flansch zu bilden, der mit einem ebenfalls nach unten abgewinkelten Flansch an der Rückseite des Bodens 112 verschraubt ist. Durch diese Verbindung vermeidet man überstehende Kanten, an denen sich Erntegutreste ansammeln könnten. An der Oberseite der Seitenwandverlängerungen 124 ist ein Querblech 126 angebracht, das den Auslass 98 des Strohhäckslers 60 nach oben hin begrenzt. Nach oben hin schließt sich an das Querblech 126 ein Querblech 116 des Strohhäckslergehäuses 90 an. Es sei noch angemerkt, dass das Erntegutresteführungselement 122 einteilig mit dem Boden 112 hergestellt werden könnte, wie auch die Seitenwandverlängerungen 124 einteilig mit den Seitenwänden 114 hergestellt werden könnten. Die dargestellte, zweiteilige Ausführungsform kann jedoch den Strohhäcksler 60 ohne Erntegutresteführungselement 122 und Seitenwandverlängerungen 124 (oder mit einem anderen Erntegutresteführungselement und anderen Seitenwandverlängerungen, nicht gezeigt) in Kombination mit einem Verteilerboden mit verstellbaren Leitblechen verwenden.

An den Seitenwandverlängerungen 124 (s. Figur 4) sind äußere Leitelemente 140 befestigt, die sich unter einem Winkel von etwa 45° nach innen und hinten erstrecken. Sie sind in der Draufsicht rechteckig und können über ihre ganze Länge oder nur in ihrem vorderen Bereich, der sich an einen mit der Seitenwandverlängerung 124 verbundenen, parallel zu ihr erstreckenden Bereich anschließt, gekrümmt sein. In vertikaler Richtung sind die äußeren Leitelemente 140 flach. Es wäre auch möglich, die äußeren Leitelemente 140 zusätzlich oder ausschließlich am Erntegutresteführungselement 122 zu befestigen. Auch könnten sie in der Art eines Pflugschars oder einer Kufe geformt sein.

An der Unterseite der Wurfgebläse 100 ist ein abgewinkeltes Bodenblech 128 angeordnet, das sich von einer Position kurz vor den Drehachsen bis an das rückwärtige Ende der Wurfgebläse erstreckt. Das Bodenblech 128 weist einen vorderen Abschnitt auf, der sich in der Ebene des Erntegutresteführungselements 122 erstreckt und mit einem nach unten abgewinkelten Flansch an einem nach unten abgewinkelten Flansch des Erntegutresteführungselements 122 anliegt. Diese Flansche können miteinander verschraubt werden oder nur aneinander anliegen, um die Wurfgebläse 100 leichter getrennt vom Strohhäcksler 60 in eine Transportposition verbringen zu können. Der vordere Abschnitt des Bodenblechs 128 erstreckt sich vom besagten Flansch bis kurz vor die Drehachse 108 der Wurfgebläse 100 und geht dort in einen rückwärtigen Abschnitt über, der sich bis unter das rückwärtige Ende der Wurfgebläse 100 und orthogonal zur Drehachse 108 erstreckt. Die Wurfpaddel 102 der Wurfgebläse 100 sind an ihren oberen Enden jeweils an einem Teller 130 mit einer mittleren Öffnung befestigt. Auch die Wurfpaddel 102 erstrecken sich nicht bis zu ihrer Drehachse 108, sondern lassen einen hinreichenden Freiraum, um den Hydromotor 106 in ihrer Mitte zu positionieren. Die unten liegenden Ausgangswellen 136 der am Deckel 132 befestigten Hydromotoren 106 treiben die Wurfpaddel 102 über Querverbindungen 138 an. Oberhalb des Tellers 130 befindet sich ein Deckel 132, der die Wurfgebläse 100 nach oben hin abdeckt, und an dessen Vorderseite zwei jeweils ein Wurfgebläse 100 halbkreisförmig nach vorn radial umschließende Teilummantelungen 134 angeordnet sind. Weitere Teilummantelungen 140 schließen sich an den benachbarten Innenseiten der Wurfgebläse 100 an, wobei zwischen den Teilummantelungen 134 und den Teilummantelungen 140 noch Lücken 142 verbleiben. Bei der Anbringung der Hydromotoren 106 innerhalb der Wurfpaddel 102 der Wurfgebläse 100 handelt es sich um eine eigenständige Erfindung.

Zwischen den beiden Wurfgebläsen 100 befindet sich ein zweiteiliges Leitelement 150, das einen vorderen Teil 152 und einen rückwärtigen Teil 154 umfasst. Der vordere Teil 152 ist am Erntegutresteführungselement 122 befestigt und mit seiner vorderen Spitze 156 an den Hüllkreis der Häckselmesser 96 angepasst, so dass er über seine dem Hüllkreis der Häckselmesser 96 benachbarte Spitze 156 kreisbogenförmig ausgeformt ist und diese Spitze 165 in einem relativ geringen Abstand vom Hüllkreis der Häckselmesser 96 angeordnet ist. Dadurch erreicht man, dass sich dort ansammelnde Erntegutreste, insbesondere bei feuchten Erntegutbedingungen, durch die Häckselmesser 96 entfernt werden, so dass sich keine unerwünschten, möglicherweise zu Verstopfungen führenden Ansammlungen von Erntegut an der Spitze 156 zu befürchten sind. An seiner Rückseite bildet der vordere Teil 152 einen Schlitz 158, in der ein flaches, vorderes Blech 158 des rückwärtigen Teils 154 eindringt. Rückwärtig des vorderen Blechs 158 verbreitert sich der rückwärtige Teil 154 und ist in sich hohl. Der rückwärtige Teil 154 ist an der Unterseite des Deckels 132 und an der Oberseite des Bodenblechs 128 befestigt, welche mit den Teilummantelungen 134, 140 und den Abschirmungen 144, 146 ein Wurfgebläsegehäuse bilden.

Anhand der Figur 3 ist erkennbar, dass zwischen dem Leitelement und den ihm benachbarten Teilummantelungen 134, 140 der Wurfgebläse 80 jeweils Durchlässe 162 vorhanden sind, durch die ein im mittleren Bereich des Strohhäckslers 60 abgegebener Teil des Emtegutrestestroms vom Strohhäcksler 60 nach hinten hindurch bis auf das Feld strömen kann.

Rückwärtig des rückwärtigen Teils 154 des Leitelements ist ein bewegliches Führungselement 164 vorgesehen mit einer vorderen Spitze 168, die sich rückwärtig der Drehachsen 108 der Wurfgebläse 100 in deren Zwickelbereich befindet, und zwei divergierenden, seitlichen, geraden Wänden 170, die jeweils einem Wurfgebläse 100 benachbart angeordnet sind. Das bewegliche Führungselement 164 ist um eine vorn liegende Achse 172, die sich parallel zur Drehachse 108 der Wurfgebläse 100 erstreckt, durch einen oberhalb des Deckels 132 rückwärtig der Hydraulikmotoren 106 angebrachten Antrieb 174 in eine Schwingbewegung versetzbar. Hierzu wird auf die DE 10 2007 037 485 B3 verwiesen.

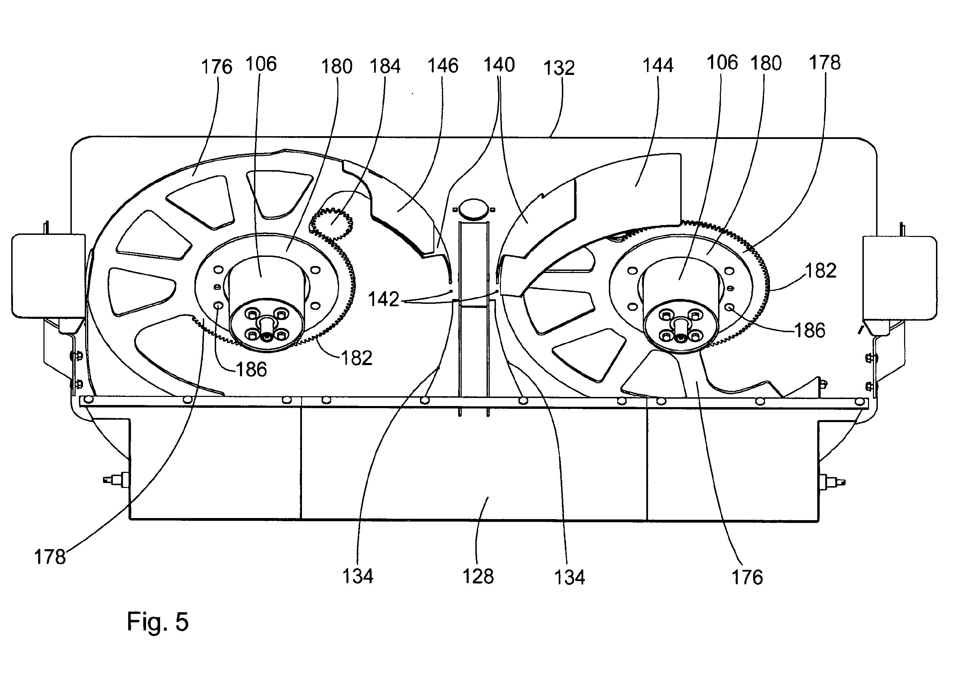

Die Teilummantelungen 140 sind, wie in den Figuren 5 bis 7 erkennbar, mit einem höheren, rückwärtigen Abschnitt und einem niedrigeren, vorderen Abschnitt ausgestattet, zwischen denen ein schräg ansteigender Bereich vorgesehen ist.

Die Teilummantelungen 140 können an ihren rückwärtigen Enden wahlweise um kürzere oder längere Winkelbereiche verlängert werden, indem erste und zweite Abschirmungen 144, 146 mit unterschiedlichen Abmessungen in Umfangsrichtung mittels eines manuell durch den Bediener aus der Kabine 16 oder selbsttätig abhängig von der Stellung der Klappe 68'kontrollierten Verstellantriebs 148 an den rückwärtigen Enden der Teilummantelungen 140 positioniert werden, um die Erntegutreste mehr oder weniger weit nach außen abzulenken, indem sie die Wurfgebläse 100 abdecken und die freie Abgabe der Erntegutreste radial nach außen verhindern, so dass die Erntegutreste die Wurfgebläse 100 erst verlassen können, nachdem sie an den Abschirmungen 144 oder 146 vorbei gelangt sind. Dadurch kann im Schwadablagebetrieb durch Verbringen der ersten, längeren Abschirmung 144 an das rückwärtige, innere Ende der Teilummantelung 140 erreicht werden, dass das Kaff seitlich neben dem Schwad abgelegt wird, oder im Strohhäckselbetrieb werden die Erntegutreste gleichmäßig über das Feld verteilt, indem die zweiten, kürzere Abschirmung 146 an das rückwärtige, innere Ende der Teilummantelung 140 verbracht wird. Außerdem können die Abschirmungen 144, 146 beider Wurfgebläse 80 unabhängig voneinander verstellt werden, um Seitenwind- und/oder -hangeinflüsse auszugleichen.

Die Abschirmungen 144, 146 sind jeweils gemeinsam und sich diametral gegenüberliegend an etwa halbkreisförmigen Drehhaltern 176 befestigt, die zwischen dem Deckel 132 und den Tellern 130 positioniert sind. Die Drehhalter 176 umfassen einen mittleren Bereich 178 mit einer zentrischen Öffnung, durch die sich die zugehörige Drehachse 108 des zugehörigen Wurfgebläses 100 erstreckt. Der mittlere Bereich 178 ist in axialer Richtung zwischen dem Deckel 132 und einer mit dem Deckel 132 verbundenen Halterungsscheibe 180 gelagert, insbesondere gleitgelagert. Die zentrische Öffnung des mittleren Bereichs 178 liegt in radialer Richtung an mit dem Deckel 132 und/oder der Halterungsscheibe 180 verbundenen Halterungselementen 186 in Form von Schrauben an und ist somit in radialer Richtung fixiert. Der mittlere Bereich 178 ist außen mit einer Verzahnung 182 versehen, die sich über einen Teil seines Umfangs erstreckt, und mit der ein mit dem Antrieb 148 gekoppeltes Zahnrad 184 kämmt.

Die ersten, längeren Abschirmungen 144 sind etwa rechteckig geformt mit einer abgewinkelten vorderen, unteren Ecke. Sie sind radial innenseitig der Teilummantelungen 140 positionierbar. Dadurch vermeidet man unerwünschte Kanten, an denen sich die relativ kleinen Erntegutreste verklemmen können, wenn sich die ersten Abschirmungen 144 in ihrer aktiven Position an der Innenseite der Teilummantelungen befinden, da dann die hierfür besonders kritische Spreu gefördert wird. Die ersten Abschirmungen 144 sind in radialer Richtung der Achsen 108 der Wurfgebläse 100 wesentlich länger als die Teilummantelungen 140.

Die zweiten, kürzeren Abschirmungen 146 sind ebenfalls etwa rechteckig geformt mit einer ausgesparten hinteren, unteren Ecke. Sie sind radial außenseitig der Teilummantelungen 140 positionierbar. Die Abmessungen der zweiten Abschirmungen 146 in radialer Richtung der Achsen 108 der Wurfgebläse 100 entspricht etwa den Abmessungen der Teilummantelungen 140 in radialer Richtung der Achsen 108 der Wurfgebläse 100.

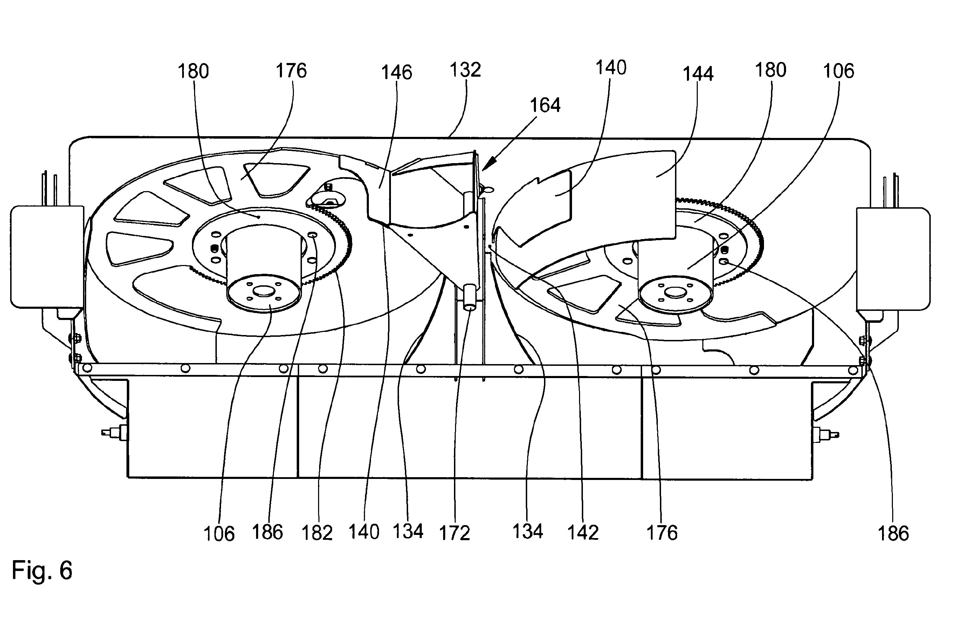

In der Figur 5 ist beim links eingezeichneten Wurfgebläse 100 die zweite Abschirmung 146 in der aktiven Stellung, in der sie sich nach hinten an die Teilummantelung 140 anschließt. Beim rechts eingezeichneten Wurfgebläse 100 ist die erste Abschirmung 144 in der aktiven Stellung, in der sie sich nach hinten an die Teilummantelung 140 anschließt. In der Figur 6, in welcher auch das Führungselement 164 mit eingezeichnet wurde, ist die Stellung der

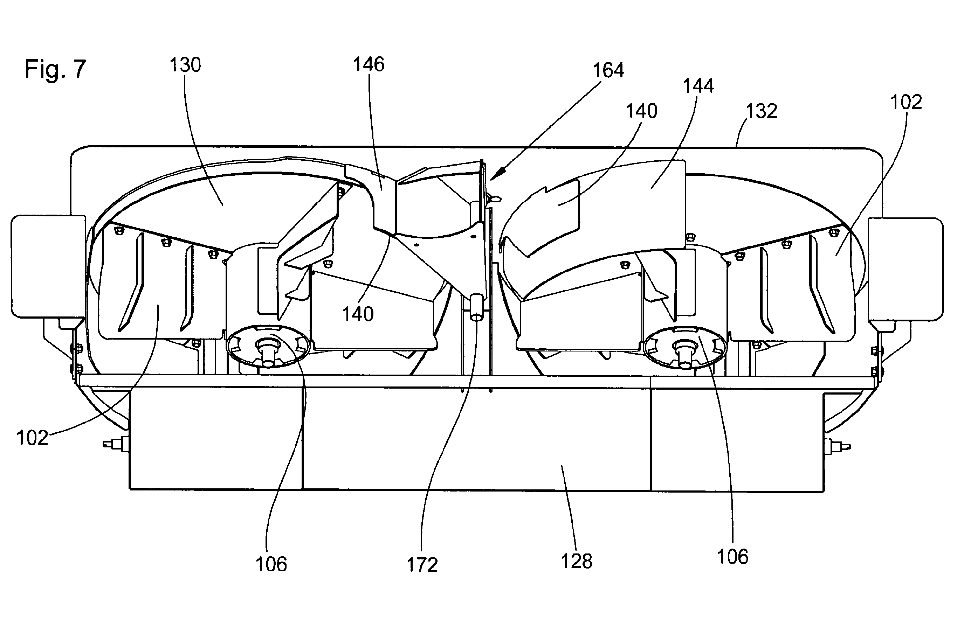

Abschirmung 144 des rechten Wurfgebläses 100 gegenüber der Figur 5 nicht verändert, während die Stellung der Abschirmung 146 des linken Wurfgebläses 100 gegenüber der Figur 5 im Uhrzeigersinn verstellt wurde, was dazu führt, dass die Erntegutreste vermehrt in der Nähe der Längsmittelebene des Mähdreschers 10 auf dem Feld abgegeben werden. Auf diese Weise können durch den Bediener oder selbsttätig Seitenwind- und Hangeinflüsse ausgeglichen werden, um die Erntegutreste möglichst gleichmäßig auf dem Feld zu verteilen. In der Figur 7 wurde die Stellung der Abschirmungen 144, 146 gegenüber der Figur 6 nicht verändert, aber die Teller 130 und die Wurfpaddel 102 mit eingezeichnet. Anders als in den Figuren 5 bis 7 dargestellt, könnten die ersten Abschirmungen 144 auch in eine Stellung verbracht werden, in der sie unmittelbar an die Teilummantelungen 134 anschließen, um die Lücken 142 zu schließen und zu erreichen, dass die Erntegutreste nur nach außen abgegeben werden.

## Patentansprüche

1. Erntegutrestehäcksel- und -verteilanordnung mit einem mit Häckselmessem (96) ausgestatteten Strohhäcksler (60) und zwei stromab des Strohhäckslers (60) seitlich nebeneinander angeordneten Wurfgebläsen (100), die im Betrieb gegensinnig und mit ihren dem Strohhäcksler (60) zugewandten Bereichen aufeinander zu bewegend um Drehachsen (108) rotieren, und an deren Umfang jeweils eine zur Veränderung der Verteilcharakteristik der Wurfgebläse (100) um die Drehachse (108) verstellbare, erste Abschirmung (144) vorgesehen ist, die an einem um die Drehachse (84) des zugehörigen Wurfgebläses (100) drehbaren Drehhalter (176) angebracht und in eine aktive Position bringbar ist, **dadurch gekennzeichnet, dass** der drehbare Drehhalter (176) außerdem eine zweite Abschirmung (146) trägt, die in der Umfangsrichtung eine kleinere Abmessung als die erste Abschirmung (144) aufweist, so dass die zweite Abschirmung (146) wahlweise anstelle der ersten Abschirmung (144) in eine aktive Position bringbar ist.

2. Erntegutrestehäcksel- und -verteilanordnung nach Anspruch 1, **dadurch gekennzeichnet, dass** sich die Abschirmungen (144, 146) in der aktiven Position im Zwickelbereich zwischen den Wurfgebläsen (100) und rückwärtig von deren Drehachsen (108) befinden.

3. Erntegutrestehäcksel- und -verteilanordnung nach Anspruch 1 oder 2, **dadurch gekennzeichnet, dass** die Abschirmungen (144, 146) sich in der aktiven Position nach hinten an eine Teilummantelung (134, 140) anschließen, die einen Teil des Umfangs des Wurfgebläses (100) umschließt.

4. Erntegutrestehäcksel- und -verteilanordnung nach einem der Ansprüche 1 bis 3,
**dadurch gekennzeichnet, dass** jeder Drehhalter (176) durch einen ihm zugeordneten, fremdkraftbetätigten Antrieb (148) um die Drehachse (108) drehbar ist.

5. Erntegutrestehäcksel- und -verteilanordnung nach Anspruch 4, **dadurch gekennzeichnet, dass** die Antriebe (148) steuerungsmäßig mit einer zum Umschalten zwischen einem Strohschwadablage- und einem Häckselbetrieb dienenden Klappe (80) gekoppelt sind, so dass die ersten Abschirmungen (144) im Strohschwadablagebetrieb selbsttätig in die aktive Position verbringbar sind, um das Kaff im Strohschwadablagebetrieb seitlich getrennt vom Strohschwad abzulegen.

6. Erntegutrestehäcksel- und -verteilanordnung nach einem der Ansprüche 4 oder 5,
**dadurch gekennzeichnet, dass** die Antriebe (148) ihre zweite Abschirmung (146) in der aktiven Position unabhängig voneinander verstellen können, um Seitenwind- und/oder Seitenhangeinflüsse auszugleichen.

7. Erntegutrestehäcksel- und -verteilanordnung nach einem der Ansprüche 1 bis 6,
**dadurch gekennzeichnet, dass** sich die Abschirmungen (144, 146) auf dem Drehhalter (176) zumindest näherungsweise diametral gegenüberliegen.

8. Erntegutrestehäcksel- und -verteilanordnung nach einem der Ansprüche 1 bis 7,
**dadurch gekennzeichnet, dass** die Drehhalter (176) einen mittleren Bereich (178) mit einer zur Drehachse (108) zentrischen Öffnung aufweisen.

9. Erntegutrestehäcksel- und -verteilanordnung nach Anspruch 8, **dadurch gekennzeichnet, dass** sich durch die Öffnung ein in der Mitte der Wurfpaddel (102) des Wurfgebläses (100) angeordneter Hydromotor (106) zum Antrieb des Wurfgebläses (100) und/oder dessen Zuleitung erstreckt.

10. Erntegutrestehäcksel- und -verteilanordnung nach Anspruch 8 oder 9, **dadurch gekennzeichnet, dass** der mittlere Bereich (178) in axialer Richtung zwischen einem Deckel (132) des Wurfgebläsegehäuses und einer mit dem Deckel (132) verbundenen Halterungsscheibe (180) gelagert ist und die zentrische Öffnung in radialer Richtung an mit dem Deckel (132) und/oder der Halterungsscheibe (180) verbundenen Halterungselementen (186) anliegt und somit in radialer Richtung fixiert ist.

11. Erntegutrestehäcksel- und -verteilanordnung nach einem der Ansprüche 8 bis 10,
**dadurch gekennzeichnet, dass** der mittlere Bereich (178) mit einer Verzahnung (182) versehen ist, die sich über einen Teil seines Umfangs erstreckt, und mit der ein mit dem Antrieb gekoppeltes Zahnrad (184) kämmt.

12. Erntegutrestehäcksel- und -verteilanordnung nach einem der Ansprüche 1 bis 11,
**dadurch gekennzeichnet, dass** die ersten Abschirmungen (144) höher als die zweiten Abschirmungen (146) sind.

13. Erntegutrestehäcksel- und -verteilanordnung nach einem der Ansprüche 1 bis 12,
**dadurch gekennzeichnet, dass** die ersten Abschirmungen (144) in ihrer aktiven Position an der Innenseite einer jeweils benachbarten Teilummantelung (140) positionierbar sind.

14. Erntegutrestehäcksel- und -verteilanordnung nach einem der Ansprüche 1 bis 13,
**dadurch gekennzeichnet, dass** die zweiten Abschirmungen (146) in ihrer aktiven Position an der Außenseite einer jeweils benachbarten Teilummantelung (140) positionierbar sind.

15. Mähdrescher (10) mit einer Erntegutrestehäcksel- und -verteilanordnung nach einem der Ansprüche 1 bis 14.

## Claims

1. Crop residue chopping and distributing arrangement having a straw chopper (60) equipped with chopping blades (96) and two ejector blowers (100) which are arranged laterally next to each other downstream of the straw chopper (60), rotate about axes of rotation (108) in opposite directions and with the regions which face the straw chopper (60) moving towards one another during operation, and a first shield (144) is provided on the circumference of each ejector blower, said shield being adjustable about the axis of rotation (108) in order to change the distribution characteristics of the ejector blowers (100) and being mounted on a rotary holder (176), which is rotatable about the axis of rotation (84) of the associated ejector blower (100), and being able to be brought into an active position, **characterized in that** the rotatable rotary holder (176) also bears a second shield (146) which has a smaller dimension in the circumferential direction than the first shield (144), and therefore the second shield (146) can optionally be brought instead of the first shield (144) into an active position.

2. Crop residue chopping and distributing arrangement according to Claim 1, **characterized in that**, in the active position, the shields (144, 146) are located in the intermeshing region between the ejector blowers (100) and to the rear of the axes of rotation (108) thereof.

3. Crop residue chopping and distributing arrangement according to Claim 1 or 2, **characterized in that**, in the active position, the shields (144, 146) are connected to the rear to a partial casing (134, 140) which surrounds part of the circumference of the ejector blower (100).

4. Crop residue chopping and distributing arrangement according to one of Claims 1 to 3, **characterized in that** each rotary holder (176) is rotatable about the axis of rotation (108) by a drive (148) which is assigned thereto and is actuated by external power.

5. Crop residue chopping and distributing arrangement according to Claim 4, **characterized in that** the drives (148) are coupled in terms of control to a flap (80) serving to switch between a straw windrow depositing operation and a chopping operation, and therefore, in the straw windrow depositing operation, the first shields (144) can be brought automatically into the active position in order, in the straw windrow depositing operation, to deposit the chaff in a manner separated laterally from the straw windrow.

6. Crop residue chopping and distributing arrangement according to either of Claims 4 and 5, **characterized in that** the drives (148) can adjust the second shield (146) thereof in the active position independently of one another in order to compensate for cross wind and/or lateral slope influences.

7. Crop residue chopping and distributing arrangement according to one of Claims 1 to 6, **characterized in that** the shields (144, 146) lie at least approximately diametrically opposite each other on the rotary holder (176).

8. Crop residue chopping and distributing arrangement according to one of Claims 1 to 7, **characterized in that** the rotary holders (176) have a central region (178) with an opening which is centred with respect to the axis of rotation (108).

9. Crop residue chopping and distributing arrangement according to Claim 8, **characterized in that** a hydraulic motor (106) which is arranged in the centre of the ejector paddles (102) of the ejector blower (100) and is intended for driving the ejector blower (100) and/or the feed line thereof extends through the opening.

10. Crop residue chopping and distributing arrangement according to Claim 8 or 9, **characterized in that** the central region (178) is mounted in the axial direction between a cover (132) of the ejector blower housing and a support disc (180) connected to the cover (132), and the centred opening bears in the radial direction against support elements (186) connected to the cover (132) and/or to the support disc (180) and is therefore fixed in the radial direction.

11. Crop residue chopping and distributing arrangement according to one of Claims 8 to 10, **characterized in that** the central region (178) is provided with a toothing (182) which extends over part of the circumference thereof and with which a gearwheel (184) coupled to the drive meshes.

12. Crop residue chopping and distributing arrangement according to one of Claims 1 to 11, **characterized in that** the first shields (144) are higher than the second shields (146).

13. Crop residue chopping and distributing arrangement according to one of Claims 1 to 12, **characterized in that**, in the active position thereof, the first shields (144) are positionable on the inside of a partial casing (140) adjacent to each thereof.

14. Crop residue chopping and distributing arrangement according to one of Claims 1 to 13, **characterized in that**, in the active position thereof, the second shields (146) are positionable on the outside of a partial casing (140) adjacent to each thereof.

15. Combine harvester (10) having a crop residue chopping and distributing arrangement according to one of Claims 1 to 14.

## Revendications

1. Agencement de hachage et de distribution de résidus de produits de récolte comprenant un hache-paille (60) muni de couteaux de hachage (96) et deux soufflantes de dispersion (100) disposées latéralement l'une à côté de l'autre en aval du hache-paille (60), lesquelles tournent en sens contraire pendant le fonctionnement autour d'axes de rotation (108) avec leurs régions tournées vers le hache-paille (60) se déplaçant l'une vers l'autre, et au niveau de leur périphérie étant à chaque fois prévu un premier écran (144), déplaçable autour de l'axe de rotation (108) pour modifier la caractéristique de distribution des soufflantes de dispersion (100), lequel est monté sur un support de rotation (176) pouvant tourner autour de l'axe de rotation (84) de la soufflante de dispersion associée (100) et peut être amené dans une position active, **caractérisé en ce que** le support de rotation rotatif (176) porte en outre un deuxième écran (146) qui présente, dans la direction périphérique, une dimension plus petite que le premier écran (144), de sorte que le deuxième écran (146) puisse être amené de manière sélective, au lieu du premier écran (144), dans une position active.

2. Agencement de hachage et de distribution de résidus de produits de récolte selon la revendication 1, **caractérisé en ce que** les écrans (144, 146) se trouvent dans la position active dans la région du coin formé entre les soufflantes de dispersion (100) et vers l'arrière de leurs axes de rotation (108).

3. Agencement de hachage et de distribution de résidus de produits de récolte selon la revendication 1 ou 2, **caractérisé en ce que** les écrans (144, 146) se raccordent dans la position active vers l'arrière à une enveloppe partielle (134, 140), qui entoure une partie de la périphérie de la soufflante de dispersion (100).

4. Agencement de hachage et de distribution de résidus de produits de récolte selon l'une quelconque des revendications 1 à 3, **caractérisé en ce que** chaque support de rotation (176) peut être entraîné en rotation autour de l'axe de rotation (108) par un entraînement (148) associé, actionné par une force extérieure.

5. Agencement de hachage et de distribution de résidus de produits de récolte selon la revendication 4, **caractérisé en ce que** les entraînements (148) sont accouplés par une commande à un volet (80) servant à commuter entre un mode de fonctionnement de dépose des andains et un mode de fonctionnement de hachage, de sorte que les premiers écrans (144) puissent être amenés automatiquement dans la position active dans le mode de fonctionnement de dépose des andains afin de déposer la menue paille en mode de fonctionnement de dépose des andains de manière séparée latéralement des andains.

6. Agencement de hachage et de distribution de résidus de produits de récolte selon l'une quelconque des revendications 4 ou 5,
**caractérisé en ce que** les entraînements (148) peuvent déplacer leur deuxième écran (146) dans la position active indépendamment l'un de l'autre, afin de compenser les influences des vents latéraux et/ou des pentes latérales.

7. Agencement de hachage et de distribution de résidus de produits de récolte selon l'une quelconque des revendications 1 à 6, **caractérisé en ce que** les écrans (144, 146) sur le support de rotation (176) sont au moins approximativement diamétralement opposés.

8. Agencement de hachage et de distribution de résidus de produits de récolte selon l'une quelconque des revendications 1 à 7, **caractérisé en ce que** les supports de rotation (176) présentent une région centrale (178) avec une ouverture centrale par rapport à l'axe de rotation (108).

9. Agencement de hachage et de distribution de résidus de produits de récolte selon la revendication 8, **caractérisé en ce qu'**à travers l'ouverture s'étend un moteur hydraulique (106) pour l'entraînement de la soufflante de dispersion (100) et/ou sa conduite d'amenée, disposé au centre de la pale de dispersion (102) de la soufflante de dispersion (100).

10. Agencement de hachage et de distribution de résidus de produits de récolte selon la revendication 8 ou 9, **caractérisé en ce que** la région centrale (178) est supportée dans la direction axiale entre un couvercle (132) du boîtier de la soufflante de dispersion et un disque de retenue (180) connecté au couvercle (132), et l'ouverture centrale s'applique dans la direction radiale contre des éléments de retenue (186) connectés au couvercle (132) et/ou au disque de retenue (180) et est donc fixée dans la direction radiale.

11. Agencement de hachage et de distribution de résidus de produits de récolte selon l'une quelconque des revendications 8 à 10, **caractérisé en ce que** la région centrale (178) est pourvue d'une denture (182) qui s'étend sur une partie de sa périphérie et avec laquelle s'engrène une roue dentée (184) accouplée à l'entraînement.

12. Agencement de hachage et de distribution de résidus de produits de récolte selon l'une quelconque des revendications 1 à 11, **caractérisé en ce que** les premiers écrans (144) sont plus hauts que les deuxièmes écrans (146).

13. Agencement de hachage et de distribution de résidus de produits de récolte selon l'une quelconque des revendications 1 à 12, **caractérisé en ce que** les premiers écrans (144) peuvent être positionnés dans leur position active au niveau du côté intérieur de chaque enveloppe partielle adjacente (140).

14. Agencement de hachage et de distribution de résidus de produits de récolte selon l'une quelconque des revendications 1 à 13, **caractérisé en ce que** les deuxièmes écrans (146) peuvent être positionnés dans leur position active au niveau du côté extérieur de chaque enveloppe partielle adjacente (140).

15. Moissonneuse-batteuse (10) comprenant un agencement de hachage et de distribution de résidus de produits de récolte selon l'une quelconque des revendications 1 à 14.
